# NEUE EUROPÄISCHE PATENTSCHRIFT

(11) **EP 2 984 360 B2**
(45) Veröffentlichungstag und Bekanntmachung des Hinweises auf die Entscheidung über den Einspruch: **20.07.2022**
(45) Hinweis auf die Patenterteilung: 05.06.2019
(21) Anmeldenummer: 14716231.7
(22) Anmeldetag: 19.03.2014
(51) Int. Cl.: F16D 13/58

(54) **DRUCKPLATTENBAUGRUPPE UND KUPPLUNGSVORRICHTUNG MIT DRUCKPLATTENBAUGRUPPE**
PRESSURE PLATE ASSEMBLY, AND CLUTCH DEVICE WITH PRESSURE PLATE ASSEMBLY
ENSEMBLE PLAQUE DE PRESSION ET DISPOSITIF D'EMBRAYAGE POURVU D'UN ENSEMBLE PLAQUE DE PRESSION

(30) Priorität: 12.04.2013 DE 102013206548
(43) Veröffentlichungstag der Anmeldung: 17.02.2016
(73) Patentinhaber: Schaeffler Technologies AG & Co. KG, 91074 Herzogenaurach (DE)
(72) Erfinder: SCHNEIDER, Michael, 76534 Baden-Baden (DE); HAASS, Joachim, 76185 Karlsruhe (DE); DING, Shen, 77830 Bühlertal (DE)
(74) Vertreter: Winter, Brandl - Partnerschaft mbB
(86) Internationale Anmeldenummer: PCT/DE2014/200131
(87) Internationale Veröffentlichungsnummer: WO 2014/166488

(56) Entgegenhaltungen:
- EP-A1- 0 535 702
- EP-A1- 1 933 051
- EP-A1- 2 207 978
- EP-A2- 1 832 769
- WO-A1-96/03589
- WO-A1-2007/085766
- DE-A1-102008 027 056
- DE-A1-102012 219 711
- FR-A- 28 422 578
- US-A1- 2010 258 399

## Beschreibung

Die vorliegende Erfindung betrifft eine Druckplattenbaugruppe gemäß dem Oberbegriff des Patentanspruchs 1. Insbesondere betrifft die vorliegende Erfindung eine Druckplattenbaugruppe und eine Kupplungsvorrichtung mit einer Druckplattenbaugruppe, insbesondere für einen Antriebsstrang eines Kraftfahrzeugs.

Aus der DE 10 2009 035 225 A1 ist eine Kupplungsvorrichtung mit einer Gegendruckplatte und einer Druckplattenbaugruppe bekannt. Die Druckplattenbaugruppe weist einen Kupplungsdeckel auf, der an der Gegendruckplatte befestigt ist. Ferner weist die Druckplattenbaugruppe eine innerhalb des Kupplungsdeckels angeordnete, in axialer Richtung der Kupplungsvorrichtung bzw. der Druckplattenbaugruppe begrenzt verlagerbare Anpressplatte zur reibschlüssigen Klemmung einer Kupplungsscheibe zwischen der Anpressplatte und der Gegendruckplatte auf. Ein Hebelelement ist mittels einer Schwenklagerung verkippbar am Kupplungsdeckel gelagert. Die Schwenklagerung weist ein deckelseitiges, an einer dem Kupplungsdeckel zugewandten Oberfläche des Hebelelements in einem ersten Anlagebereich anliegendes Lager und ein anpressplattenseitiges, an einer der Anpressplatte zugewandten Oberfläche des Hebelelements in einem zweiten Anlagebereich anliegendes Lager auf. Beide Lager, die jeweils als Drahtringe ausgebildet sind, weisen den gleichen Abstand zu einer Drehachse der Kupplungsvorrichtung bzw. der Druckplattenbaugruppe auf.

Aus der WO 2007/085766 A1 ist eine Druckplattenbaugruppe gemäß dem Oberbegriff des Patentanspruchs 1 bekannt.

Es ist Aufgabe der vorliegenden Erfindung, eine Druckplattenbaugruppe und eine Kupplungsvorrichtung mit einer Druckplattenbaugruppe anzugeben, durch die Schwingungen im Antriebsstrang eines Kraftfahrzeugs gedämpft werden können.

Erfindungsgemäß gelöst wird diese Aufgabe durch eine Druckplattenbaugruppe gemäß Patentanspruch 1 mit zumindest einem Kupplungsdeckel, zumindest einer zumindest teilweise innerhalb des Kupplungsdeckels angeordneten, in axialer Richtung der Druckplattenbaugruppe begrenzt verlagerbaren Anpressplatte zur reibschlüssigen Klemmung einer Kupplungsscheibe zwischen der Anpressplatte und einer Gegendruckplatte, und zumindest einem Hebelelement, das mittels einer Schwenklagerung verkippbar am Kupplungsdeckel gelagert ist, wobei die Schwenklagerung ein deckelseitiges, an einer dem Kupplungsdeckel zugewandten Oberfläche des Hebelelements in einem ersten Anlagebereich anliegendes Lager und ein anpressplattenseitiges, an einer der Anpressplatte zugewandten Oberfläche des Hebelelements in einem zweiten Anlagebereich anliegendes Lager aufweist. Da der erste Anlagebereich und der zweite Anlagebereich unterschiedliche Abstände zu einer Drehachse der Druckplattenbaugruppe aufweisen, kann bei der Betätigung der Druckplattenbaugruppe eine zusätzliche Hysterese erzeugt werden, wodurch Schwingungen im Antriebsstrang des Kraftfahrzeugs verringert werden können.

Insbesondere weisen der erste Anlagebereich und der zweite Anlagebereich im unbetätigten Zustand der Druckplattenbaugruppe unterschiedliche Abstände zur Drehachse der Druckplattenbaugruppe auf. Alternativ oder zusätzlich können der erste Anlagebereich und der zweite Anlagebereich aber auch im betätigten Zustand der Druckplattenbaugruppe unterschiedliche Abstände zur Drehachse der Druckplattenbaugruppe aufweisen.

Bevorzugte Ausführungsbeispiele der vorliegenden Erfindung sind in den abhängigen Ansprüchen dargelegt.

Die Anpressplatte ist vorzugsweise mittels Blattfedern drehfest innerhalb des Kupplungsdeckels angeordnet und bezüglich des Kupplungsdeckels durch das Hebelelement begrenzt verlagerbar. Durch eine auf das Hebelelement wirkende Aktoreinrichtung kann die Druckplattenbaugruppe ausgerückt bzw. eingerückt werden. Bei dem Hebelelement kann es sich um eine Tellerfeder, wie sie üblicherweise bei normal-eingerückten Druckplattenbaugruppen zum Einsatz kommt, oder um eine Hebelfeder, wie sie üblicherweise bei normal-ausgerückten Druckplattenbaugruppen zum Einsatz kommt, handeln.

Wenn die Druckplattenbaugruppe als normal-eingerückte Druckplattenbaugruppe ausgebildet ist, überwiegt die Kraft der einrückenden Tellerfeder, die auf die Anpressplatte wirkt, im unbetätigten Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Druckplattenbaugruppe ausgerückt wird. Andererseits kann die Druckplattenbaugruppe aber auch als normal-ausgerückte Druckplattenbaugruppe ausgebildet sein, das heißt als Druckplattenbaugruppe, bei der die Kraft der ausrückenden Blattfedern, die auf die Anpressplatte wirken, im unbetätigten Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Druckplattenbaugruppe eingerückt wird.

Die Druckplattenbaugruppe kann gleichermaßen als gedrückte Druckplattenbaugruppe, das heißt als Druckplattenbaugruppe, bei der die Aktoreinrichtung eine drückende Kraft auf die Tellerfeder bzw. die Hebelfeder ausübt, oder als gezogene Druckplattenbaugruppe, das heißt als Druckplattenbaugruppe, bei der die Aktoreinrichtung eine ziehende Kraft auf die Tellerfeder bzw. die Hebelfeder ausübt, ausgebildet sein.

Die Druckplattenbaugruppe kann einerseits für eine Trockenkupplung und andererseits für eine Nasskupplung geeignet sein. Darüber hinaus kann die Druckplattenbaugruppe für eine Einzelkupplung geeignet sein, die eine einzige Anpressplatte, eine einzige Gegendruckplatte und eine dazwischen klemmbare Kupplungsscheibe aufweist, kann jedoch auch für eine Mehrfachkupplung, insbesondere für eine Doppelkupplung, geeignet sein. Bei einer Doppelkupplung können sich zwei Druckplattenbaugruppen eine gemeinsame Gegendruckplatte teilen, die in diesem Zusammenhang auch als Zentralplatte bezeichnet wird. Ebenfalls können die beiden Druckplattenbaugruppen aber auch an separaten Gegendruckplatten vorgesehen sein.

Der erste Anlagebereich, in dem das deckelseitige Lager an der dem Kupplungsdeckel zugewandten Oberfläche des Hebelelements anliegt, ist in radialer Richtung der Druckplattenbaugruppe weiter innen angeordnet als der zweite Anlagebereich, in dem das anpressplattenseitige Lager an der der Anpressplatte zugewandten Oberfläche des Hebelelements anliegt. Hierdurch ist ein besonders vorteilhafter Hystereseverlauf bei der Betätigung der Druckplattenbaugruppe möglich.

Gemäß einem weiteren bevorzugten Ausführungsbeispiel ist der erste Anlagebereich als ununterbrochener Ring ausgebildet. Alternativ oder zusätzlich ist der zweite Anlagebereich als ununterbrochener Ring ausgebildet. Dies ermöglicht eine besonders zuverlässige verkippbare Lagerung des Hebelelements am Kupplungsdeckel.

Gemäß der Erfindung ist das deckelseitige Lager als Drahtring ausgebildet. Durch die Verwendung von Drahtringen kann die Eingrabung von Bauteilen in das Hebelelement im Bereich der Schwenklagerung verringert werden.

Gemäß einem weiteren bevorzugten Ausführungsbeispiel ist das deckelseitige Lager einteilig mit dem Kupplungsdeckel ausgebildet. Insbesondere ist es dabei von Vorteil, wenn das deckelseitige Lager im Kupplungsdeckel sickenförmig ausgebildet ist, vorzugsweise als umlaufende Sicke. Durch diese Ausbildung kann die Anzahl der für die Herstellung der Druckplattenbaugruppe benötigten Bauteile verringert werden.

Das anpressplattenseitige Lager ist als Stützfeder ausgebildet. Insbesondere ist es von Vorteil, wenn das anpressplattenseitige Lager als ringförmige Stützfeder ausgebildet ist. Die Stützfeder ist vorzugsweise tellerfederartig ausgebildet. Durch die Stützfeder kann der Verschleiß an der Hebelfeder im Bereich der Schwenklagerung verringert werden. Dabei ist es insbesondere von Vorteil, wenn der Anlagebereich, in dem die Stützfeder an der der Anpressplatte zugewandten Oberfläche des Hebelelements anliegt, auf einem größeren Radius angeordnet ist als der Anlagebereich, in dem das deckelseitige Lager an der dem Kupplungsdeckel zugewandten Oberfläche des Hebelelements anliegt.

Das anpressplattenseitige Lager ist in einem Abstützbereich mittelbar am Kupplungsdeckel abgestützt. Insbesondere ist es von Vorteil, wenn die mittelbare Abstützung mittels mehrerer in Umfangsrichtung der Druckplattenbaugruppe verteilt angeordneter Bolzen erfolgt. Alternativ ist das anpressplattenseitige Lager in einem Abstützbereich unmittelbar am Kupplungsdeckel abgestützt, vorzugsweise mittels einteilig mit dem Kupplungsdeckel ausgebildeter Haken.

Der Abstützbereich ist in radialer Richtung weiter innen als der erste Anlagebereich angeordnet.

Gemäß einem weiteren bevorzugten Ausführungsbeispiel ist eine Verschleißnachstelleinrichtung zur automatischen Nachstellung von Kupplungsverschleiß vorgesehen. Ein Verstellring der Verschleißnachstelleinrichtung ist vorzugsweise in axialer Richtung zwischen der Anpressplatte und dem Hebelelement angeordnet. Alternativ oder zusätzlich ist der Verstellring vorzugsweise in radialer Richtung außerhalb des zweiten Anlagebereichs angeordnet.

Bei der Verschleißnachstelleinrichtung handelt es sich vorzugsweise um eine wegbasierte Verschleißnachstelleinrichtung. Insbesondere ist der Verstellring der Verschleißnachstelleinrichtung in axialer Richtung zwischen der Anpressplatte und einem Kraftrand des Hebelelements klemmbar gelagert. Auf seiner dem Hebelelement abgewandten Oberfläche weist der Verstellring Rampen auf, die gleitbeweglich auf anpressplattenseitigen Gegenrampen angeordnet sind, so dass bei einer relativen Verdrehung des Verstellrings die Rampen des Verstellrings an den Gegenrampen entlang gleiten, wodurch sich der Abstand zwischen der Anpressplatte und der der Anpressplatte abgewandten Oberfläche des Verstellrings, mit der der Verstellring in Anlage am Hebelelement ist, verändert. Vorzugsweise sind die Gegenrampen einteilig mit der Anpressplatte ausgebildet, und insbesondere in die Anpressplatte eingelassen. Um Kupplungsverschleiß nachzustellen, erfolgt die Verdrehung des Verstellrings vorzugsweise mittels eines Spindeltriebs, vorzugsweise im ausgerückten Zustand der Druckplattenbaugruppe.

Die vorgenannte Aufgabe wird ferner erfindungsgemäß gelöst durch eine Kupplungsvorrichtung gemäß Patentanspruch 6 mit zumindest einer Gegendruckplatte und zumindest einer Druckplattenbaugruppe nach zumindest einem der vorangegangenen Ausführungsbeispiele, wobei der Kupplungsdeckel der Druckplattenbaugruppe an der Gegendruckplatte befestigt ist.

Wenn die Kupplungsscheibe im eingerückten Zustand der Kupplungsvorrichtung zwischen der Anpressplatte und der Gegendruckplatte verspannt ist, erfolgt eine reibschlüssige Übertragung des Drehmoments von der Eingangsseite der Kupplungsvorrichtung, über die Anpressplatte und die Gegendruckplatte auf die Kupplungsscheibe, und von der Kupplungsscheibe auf die Ausgangsseite der Kupplungsvorrichtung, beispielsweise auf die Eingangswelle eines Getriebes.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einer Druckplattenbaugruppe im eingerückten Zustand, und
- Figur 2: die Kupplungsvorrichtung aus Figur 1 mit der Druckplattenbaugruppe im ausgerückten Zustand.

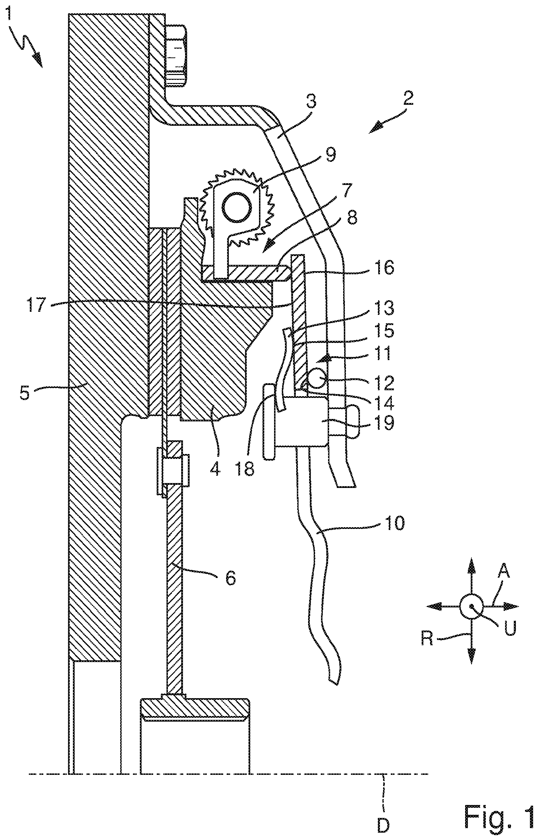

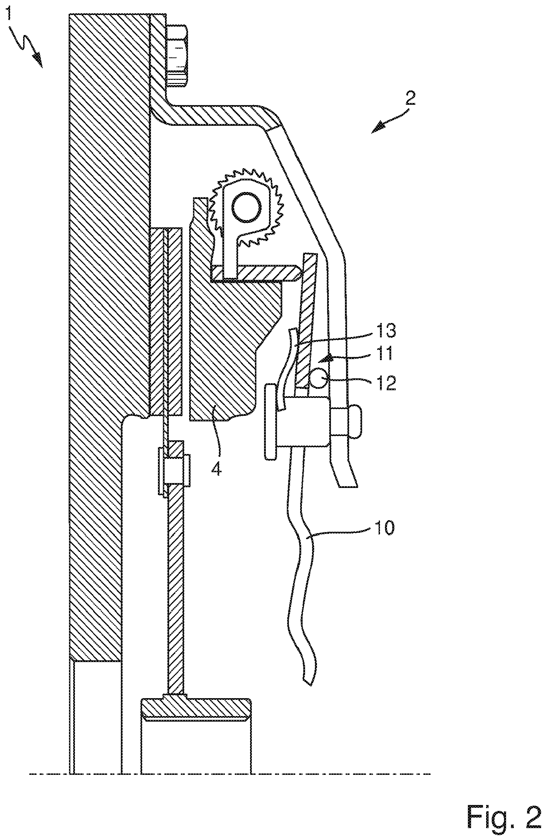

In den Figuren 1 und 2 ist ein bevorzugtes Ausführungsbeispiel einer Kupplungsvorrichtung 1 für ein Kraftfahrzeug dargestellt. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweisen. Insbesondere betrifft die nachfolgende Beschreibung Ausführungsbeispiele einer Druckplattenbaugruppe 2 der Kupplungsvorrichtung 1.

Die Kupplungsvorrichtung 1 ist drehbar um eine Drehachse D gelagert und weist zumindest eine Druckplattenbaugruppe 2 auf. Die Druckplattenbaugruppe 2 weist zumindest einen Kupplungsdeckel 3, zumindest eine zumindest teilweise innerhalb des Kupplungsdeckels 3 angeordnete, in axialer Richtung A der Kupplungsvorrichtung 1 bzw. der Druckplattenbaugruppe 2 begrenzt verlagerbare Anpressplatte 4 zur reibschlüssigen Klemmung einer Kupplungsscheibe 6 zwischen der Anpressplatte 4 und einer Gegendruckplatte 5, und zumindest ein Hebelelement 10 auf. Die Gegendruckplatte 5 ist mit einem Gehäusebauteil der Kupplungsvorrichtung 1, insbesondere dem Kupplungsdeckel 3, fest verbunden, insbesondere verschraubt. Die Anpressplatte 4 ist im Kupplungsgehäuse, insbesondere innerhalb des Kupplungsdeckels 3 der Druckplattenbaugruppe 2, drehfest gelagert und in axialer Richtung A begrenzt verlagerbar. Insbesondere ist die Anpressplatte 4 mittels mehrerer, nicht dargestellter Blattfedern drehfest im Kupplungsgehäuse, insbesondere am Kupplungsdeckel 3, befestigt und von der Gegendruckplatte 5 weg, das heißt mit Bezug auf Figur 1 und 2 nach rechts, vorgespannt.

Das Hebelelement 10 ist für eine normal-eingerückte, in den Figuren 1 und 2 dargestellte Kupplungsvorrichtung 1 bzw. Druckplattenbaugruppe 2 als Tellerfeder und für eine normal-ausgerückte Kupplungsvorrichtung 1 bzw. Druckplattenbaugruppe 2 als Hebelfeder ausgebildet. Das Hebelelement 10 ist durch eine Schwenklagerung 11, auf die nachfolgend noch eingegangen wird, verkippbar am Kupplungsdeckel 3 gelagert und durch eine nicht dargestellte Aktoreinrichtung betätigbar. Insbesondere ist das Hebelelement 10 über Hebelspitzen, die in radialer Richtung R der Kupplungsvorrichtung 1 bzw. der Druckplattenbaugruppe 2 auf der Innenseite des vorzugsweise im Wesentlichen ringförmig ausgebildeten Hebelelements 10 angeordnet sind, durch die Aktoreinrichtung, die auf die Hebelspitzen drückt, betätigbar.

Bei der normal-eingerückten, in den Figuren 1 und 2 dargestellten Kupplungsvorrichtung 1 überwiegt die wirksame Kraft des als Tellerfeder ausgebildeten Hebelelements 10 die Gegenkraft der Blattfedern, während bei einer normal-ausgerückten Kupplungsvorrichtung 1 die Gegenkraft der Blattfedern die wirksame Kraft des als Hebelfeder ausgebildeten Hebelelements 10 überwiegt. Dementsprechend führt eine Betätigung der Tellerfeder einer normal-eingerückten Kupplungsvorrichtung 1 zum Ausrücken der Kupplungsvorrichtung 1 durch Verkippen bzw. Umschnappen der Tellerfeder, das heißt zum Abhub der Anpressplatte 4 und zur Entfernung der Anpressplatte 4 von der Gegendruckplatte 5, wie dies in Figur 2 dargestellt ist, während eine Betätigung der Hebelfeder einer normal-ausgerückten Kupplungsvorrichtung 1 zum Einrücken der Kupplungsvorrichtung 1 durch Verkippen der Hebelfeder führt.

Bei eingerückter Kupplungsvorrichtung 1 wird ein Drehmoment von der Eingangsseite der Kupplungsvorrichtung 1, beispielsweise von einem Zweimassenschwungrad, über das Kupplungsgehäuse und sowohl die Gegendruckplatte 5 als auch die Anpressplatte 4, die beide mit dem Kupplungsgehäuse, insbesondere dem Kupplungsdeckel 3, drehfest verbunden sind, reibschlüssig auf die Kupplungsscheibe 6 übertragen. Von der Kupplungsscheibe 6, die reibschlüssig zwischen der Gegendruckplatte 5 und der Anpressplatte 4 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe 6, als auch in geringerem Maße die Reibflächen der Gegendruckplatte 5 und der Anpressplatte 4 einem Verschleiß unterworfen sind, muss über die Lebensdauer der Kupplungsvorrichtung 1 die Anpressplatte 4 immer näher an die Gegendruckplatte 5 heranbewegt werden, um die Abnahme der Dicke der Reibbeläge und der Stärke der Reibflächen in axialer Richtung A zu kompensieren und den Reibschluss herstellen bzw. die Kupplungsvorrichtung 1 einrücken zu können. Hierzu ist in der Kupplungsvorrichtung 1 eine Verschleißnachstelleinrichtung 7 ausgebildet.

In seinem radialen Außenbereich weist das Hebelelement 10 einen Kraftrand auf. Über einen Verstellring 8, der der Verschleißnachstelleinrichtung 7 zuzuordnen ist, wirkt das Hebelelement 10 im dargestellten Ausführungsbeispiel mittelbar auf die Anpressplatte 4, indem der Kraftrand des Hebelelements 10 an einer hebelelementseitigen, der Anpressplatte 4 abgewandten Oberfläche des Verstellrings 8 anliegt und im eingerückten Zustand der Kupplungsvorrichtung 1 bzw. der Druckplattenbaugruppe 2 Druck auf den Verstellring 8 ausübt. Dieser Druck wird über die anpressplattenseitige, dem Hebelelement 10 abgewandte Oberfläche des Verstellrings 8 auf die Anpressplatte 4 übertragen.

Insbesondere ist der Verstellring 8 als Rampenring ausgebildet, dessen Rampen in Umfangsrichtung U der Kupplungsvorrichtung 1 bzw. der Druckplattenbaugruppe 2 gleitbeweglich auf in die Anpressplatte 4 eingelassenen Gegenrampen gelagert ist. Die Verdrehung des Verstellrings 8 erfolgt durch eine Spindelmutter eines Spindeltriebs 9, wobei eine Drehbewegung des Spindeltriebs 9 in eine translatorische Bewegung der Spindelmutter umgesetzt wird, und die translatorische Bewegung der Spindelmutter in eine Drehbewegung des Verstellrings 8 umgesetzt wird. Wenn ein hinreichender Kupplungsverschleiß beim Einrücken der Druckplattenbaugruppe 2 sensiert worden ist, wird beim Ausrücken der Druckplattenbaugruppe 2 der Spindeltrieb 9 durch eine nicht dargestellte Antriebsklinke angetrieben. Bezüglich des genauen Aufbaus der Verschleißnachstelleinrichtung 7 sowie deren Funktion bei der Verschleißsensierung und der Verschleißnachstellung wird auf die DE 10 2009 035 225 A1 verwiesen.

Obwohl es bevorzugt ist, die Verschleißnachstelleinrichtung 7 als wegbasierte Verschleißnachstelleinrichtung 7 auszubilden, wie dies in den Figuren 1 und 2 dargestellt ist, kann die Verschleißnachstelleinrichtung 7 auch als kraftbasierte Verschleißnachstelleinrichtung 7 ausgebildet sein. Ebenso ist es möglich, dass die Druckplattenbaugruppe 2 bzw. die Kupplungsvorrichtung 1 keine Verschleißnachstelleinrichtung 7 aufweist. Wenn keine Verschleißnachstelleinrichtung 7 vorgesehen ist, oder wenn eine kraftbasierte Verschleißnachstelleinrichtung 7 vorgesehen ist, ist es von Vorteil, wenn der Kraftrand des Hebelelements 10 unmittelbar auf die Anpressplatte 4, beispielsweise mittels auf der Rückseite der Anpressplatte 4 ausgebildeten Anpressplattennocken, wirkt.

Die Schwenklagerung 11 weist ein deckelseitiges Lager 12 auf, das an einer dem Kupplungsdeckel 3 zugewandten Oberfläche 16 des Hebelelements 10 in einem ersten Anlagebereich 14 am Hebelelement 10 anliegt. Ferner weist die Schwenklagerung 11 ein anpressplattenseitiges Lager 13 auf, das an einer der Anpressplatte 4 zugewandten Oberfläche 17 des Hebelelements 10 in einem zweiten Anlagebereich 15 am Hebelelement 10 anliegt. Der Verstellring 8 der Verschleißnachstelleinrichtung 7 ist in radialer Richtung R außerhalb des zweiten Anlagebereichs 15 angeordnet.

Sowohl im unbetätigten Zustand der Kupplungsvorrichtung 1, der in Figur 1 dargestellt ist, als auch im betätigten Zustand der Kupplungsvorrichtung 1, der in Figur 2 dargestellt ist, weisen der erste Anlagebereich 14 und der zweite Anlagebereich 15 unterschiedliche Abstände zu der Drehachse D der Kupplungsvorrichtung 1 bzw. der Druckplattenbaugruppe 2 auf. Es ist jedoch auch möglich, dass unterschiedliche Abstände der beiden Anlagebereiche 14, 15 zur Drehachse D nur vorliegen, wenn die Kupplungsvorrichtung 1 unbetätigt ist bzw. nur vorliegen, wenn die Kupplungsvorrichtung 1 betätigt ist, und dann in jeweils anderen - betätigten bzw. unbetätigten - Zustand die Abstände der beiden Anlagebereiche 14, 15 zur Drehachse D gleich sind.

Vorzugsweise ist der erste Anlagebereich 14 in radialer Richtung R weiter innen angeordnet als der zweite Anlagebereich 15. Im dargestellten Ausführungsbeispiel sind der erste Anlagebereich 14 und der zweite Anlagebereich 15 jeweils als ununterbrochener Ring ausgebildet. Es ist jedoch auch möglich, dass der erste Anlagebereich 14 und/oder der zweite Anlagebereich 15 jeweils aus mehreren in Umfangsrichtung U voneinander beabstandeten Ringsegmenten ausgebildet ist/sind.

Im dargestellten Ausführungsbeispiel ist das deckelseitige Lager 12 als Drahtring ausgebildet, der in axialer Richtung zwischen der dem Kupplungsdeckel 3 zugewandten Oberfläche 16 des Hebelelements 10 und der dem Hebelelement 10 zugewandten Oberfläche des Kupplungsdeckels 3, das heißt der Innenseite des Kupplungsdeckels 3, geklemmt ist. Bei der Verkippung des Hebelelements 10 während der Betätigung der Kupplungsvorrichtung 1 wälzt sich das Hebelelement 10 über einen gewissen Oberflächenbereich des Drahtrings ab. Obwohl dies nicht dargestellt ist und nicht Teil der Erfindung ist, ist es beispielsweise jedoch auch möglich, dass das deckelseitige Lager 12 einteilig mit dem Kupplungsdeckel 3 ausgebildet ist. Beispielsweise kann das deckelseitige Lager 12 als umlaufende Sicke bzw. als in Umfangsrichtung U unterbrochene Sickenabschnitte ausgebildet sein, was aber auch nicht Teil der Erfindung ist.

Ferner ist im dargestellten Ausführungsbeispiel das anpressplattenseitige Lager 13 als ringförmige Stützfeder ausgebildet. Im zweiten Anlagebereich 15 liegt die Stützfeder unmittelbar an der der Anpressplatte 4 zugewandten Oberfläche 17 des Hebelelements 10 an. Da die Stützfeder am zweiten Anlagebereich 15 verrundet ist, kann sich das Hebelelement 10 bei Betätigung der Kupplungsvorrichtung 1, das heißt bei Verkippung des Hebelelements 10, über einen gewissen Oberflächenbereich der Stützfeder abwälzen.

Beispielsweise ist es jedoch auch möglich, dass das anpressplattenseitige Lager 13 zumindest eine Stützfeder aufweist und die Stützfeder unter Vermittlung beispielsweise eines Drahtrings auf das Hebelelement 10 wirkt. In diesem Fall ist der bzw. ein weiterer Drahtring in axialer Richtung A zwischen der Stützfeder und dem Hebelelement 10 angeordnet.

Das anpressplattenseitige Lager 13, insbesondere die Stützfeder, ist in einem Abstützbereich 18 mittels mehrerer in Umfangsrichtung U verteilt angeordneter Bolzen 19 mittelbar am Kupplungsdeckel 3 abgestützt. Insbesondere handelt es sich bei dem Bolzen 19 um Tellerfederzentrierbolzen, die neben der Abstützung des anpressplattenseitigen Lagers 13 bzw. der Stützfeder auch die Funktion der Zentrierung des Hebelelements 10, insbesondere der Tellerfeder, übernehmen. Alternativ ist es beispielsweise möglich, dass das anpressplattenseitige Lager 13 in seinem Abstützbereich 18 unmittelbar am Kupplungsdeckel 3 abgestützt ist. Hierbei ist es von Vorteil, wenn einteilig mit dem Kupplungsdeckel 3 ausgebildete Haken das anpressplattenseitige Lager in seinem Abstützbereich 18 hintergreifen, so dass das anpressplattenseitige Lager 13 in axialer Richtung zwischen den Haken und dem Hebelelement 10 geklemmt ist.

Der Abstützbereich 18 ist in radialer Richtung R weiter innen als der zweite Anlagebereich 15, das heißt der Anlagebereich 15, in dem das anpressplattenseitige Lager am Hebelelement 10 anliegt, angeordnet. Insbesondere ist es von Vorteil, wenn der Abstützbereich 18 in radialer Richtung R auf demselben Radius oder in radialer Richtung weiter innen als der erste Anlagebereich 14, das heißt der Anlagebereich 14, in dem das deckelseitige Lager 12 am Hebelelement 10 anliegt, angeordnet ist.

Die vorangegangenen Ausführungsbeispiele betreffen eine Druckplattenbaugruppe 2 mit zumindest einem Kupplungsdeckel 3, zumindest einer zumindest teilweise innerhalb des Kupplungsdeckels 3 angeordneten, in axialer Richtung A der Druckplattenbaugruppe 2 begrenzt verlagerbaren Anpressplatte 4 zur reibschlüssigen Klemmung einer Kupplungsscheibe 6 zwischen der Anpressplatte 4 und einer Gegendruckplatte 5, und zumindest einem Hebelelement 10, das mittels einer Schwenklagerung 11 verkippbar am Kupplungsdeckel 3 gelagert ist, wobei die Schwenklagerung 11 ein deckelseitiges, an einer dem Kupplungsdeckel 3 zugewandten Oberfläche 16 des Hebelelements 10 in einem ersten Anlagebereich 14 anliegendes Lager 12 und ein anpressplattenseitiges, an einer der Anpressplatte 4 zugewandten Oberfläche 17 des Hebelelements 10 in einem zweiten Anlagebereich 15 anliegendes Lager 13 aufweist, und wobei der erste Anlagebereich 14 und der zweite Anlagebereich 15, insbesondere im unbetätigten Zustand der Druckplattenbaugruppe 2, unterschiedliche Abstände zu einer Drehachse D der Druckplattenbaugruppe 2 aufweisen.

Ferner betreffen die vorangegangenen Ausführungsbeispiele eine Kupplungsvorrichtung 1 mit zumindest einer Gegendruckplatte 5 und zumindest einer Druckplattenbaugruppe 2 nach zumindest einem der vorangegangenen Ausführungsbeispiele, wobei der Kupplungsdeckel 3 der Druckplattenbaugruppe 2 an der Gegendruckplatte 5 befestigt ist.

### Bezugszeichenliste

- 1: Kupplungsvorrichtung
- 2: Druckplattenbaugruppe
- 3: Kupplungsdeckel
- 4: Anpressplatte
- 5: Gegendruckplatte
- 6: Kupplungsscheibe
- 7: Verschleißnachstelleinrichtung
- 8: Verstellring
- 9: Spindeltrieb
- 10: Hebelelement
- 11: Schwenklagerung
- 12: deckelseitiges Lager
- 13: anpressplattenseitiges Lager
- 14: erster Anlagebereich
- 15: zweiter Anlagebereich
- 16: Oberfläche
- 17: Oberfläche
- 18: Abstützbereich
- 19: Bolzen
- A: axiale Richtung
- D: Drehachse
- R: radiale Richtung
- U: Umfangsrichtung

## Patentansprüche

1. Druckplattenbaugruppe (2) mit zumindest einem Kupplungsdeckel (3), zumindest einer zumindest teilweise innerhalb des Kupplungsdeckels (3) angeordneten, in axialer Richtung (A) der Druckplattenbaugruppe (2) begrenzt verlagerbaren Anpressplatte (4) zur reibschlüssigen Klemmung einer Kupplungsscheibe (6) zwischen der Anpressplatte (4) und einer Gegendruckplatte (5), und zumindest einem Hebelelement (10), das mittels einer Schwenklagerung (11) verkippbar am Kupplungsdeckel (3) gelagert ist, wobei die Schwenklagerung (11) ein deckelseitiges, an einer dem Kupplungsdeckel (3) zugewandten Oberfläche (16) des Hebelelements (10) in einem ersten Anlagebereich (14) anliegendes Lager (12) und ein anpressplattenseitiges, an einer der Anpressplatte (4) zugewandten Oberfläche (17) des Hebelelements (10) in einem zweiten Anlagebereich (15) anliegendes, als Stützfeder ausgebildetes Lager (13) aufweist, wobei der erste Anlagebereich (14) des deckelseitigen Lagers (12) am Hebelelement (10), insbesondere im unbetätigten Zustand der Druckplattenbaugruppe (2), in radialer Richtung (R) der Druckplattenbaugruppe (2) weiter innen angeordnet ist als der zweite Anlagebereich (15) der Stützfeder am Hebelelement (10), und wobei Stützfeder in einem Abstützbereich (18) mittelbar oder unmittelbar am Kupplungsdeckel (3) abgestützt ist, **dadurch gekennzeichnet, dass** der Abstützbereich (18), in dem die Stützfeder mittelbar oder unmittelbar am Kupplungsdeckel (3) abgestützt ist, der Bereich ist, an dem die Stützfeder zur Abstützung anliegt, und dieser Bereich in radialer Richtung (R) weiter innen als der erste Anlagebereich (14) des deckelseitigen Lagers (12) am Hebelelement (10) angeordnet ist, wobei das deckelseitige Lager (12) als Drahtring ausgebildet ist.

2. Druckplattenbaugruppe (2) nach Anspruch 1, wobei der erste Anlagebereich (14) und/oder der zweite Anlagebereich (15) als ununterbrochener Ring ausgebildet ist/sind.

3. Druckplattenbaugruppe (2) nach zumindest einem der Ansprüche 1 oder 2, wobei die Stützfeder ringförmig ausgebildet ist.

4. Druckplattenbaugruppe (2) nach zumindest einem der Ansprüche 1 bis 3, wobei die Stützfeder im Abstützbereich (18) mittelbar mittels mehrerer in Umfangsrichtung (U) der Druckplattenbaugruppe (2) verteilt angeordneter Bolzen (19) oder unmittelbar mittels einteilig mit dem Kupplungsdeckel (3) ausgebildeter Haken am Kupplungsdeckel (3) abgestützt ist.

5. Druckplattenbaugruppe (2) nach zumindest einem der Ansprüche 1 bis 4, wobei eine Verschleißnachstelleinrichtung (7) zur automatischen Nachstellung von Kupplungsverschleiß vorgesehen ist, und ein Verstellring (8) der Verschleißnachstelleinrichtung (7) vorzugsweise in axialer Richtung (A) zwischen der Anpressplatte (4) und dem Hebelelement (10) und/oder vorzugsweise in radialer Richtung (R) außerhalb des zweiten Anlagebereichs (15) angeordnet ist.

6. Kupplungsvorrichtung (1) mit zumindest einer Gegendruckplatte (5) und zumindest einer Druckplattenbaugruppe (2) nach zumindest einem der Ansprüche 1 bis 5, wobei der Kupplungsdeckel (3) der Druckplattenbaugruppe (2) an der Gegendruckplatte (5) befestigt ist.

## Claims

1. Pressure plate assembly (2) having at least one clutch cover (3), at least one pressing plate (4) for clamping a clutch disc (6) in a frictionally locking manner between the pressing plate (4) and a counterpressure plate (5), which pressing plate (4) is arranged at least partially within the clutch cover (3) and can be moved to a limited extent in the axial direction (A) of the pressure plate assembly (2), and at least one lever element (10) which is mounted on the clutch cover (3) such that it can be tilted by means of a pivoting bearing (11), the pivoting bearing (11) having a cover-side bearing (12), which bears in a first contact region (14) on a surface (16) of the lever element (10), which surface (16) faces the clutch cover (3), and a pressing plate-side bearing (13) which is configured as a supporting spring and bears in a second contact region (15) on a surface (17) of the lever element (10), which surface (17) faces the pressing plate (4), the first contact region (14) of the cover-side bearing (12) on the lever element (10), in particular in the non-actuated state of the pressure plate assembly (2), being arranged further to the inside in the radial direction (R) of the pressure plate assembly (2) than the second contact region (15) of the supporting spring on the lever element (10), and the supporting spring being supported indirectly or directly on the clutch cover (3) in a supporting region (18), **characterized in that** the supporting region (18), in which the supporting spring is supported indirectly or directly on the clutch cover (3), is the region, against which the supporting spring bears for support, and the said region is arranged further to the inside in the radial direction (R) than the first contact region (14) of the cover-side bearing (12) on the lever element (10), wherein the cover-side bearing (12) is configured as a wire ring.

2. Pressure plate assembly (2) according to Claim 1, the first contact region (14) and/or the second contact region (15) being configured as an uninterrupted ring.

3. Pressure plate assembly (2) according to at least one of Claims 1 or 2, the supporting spring being of annular configuration.

4. Pressure plate assembly (2) according to at least one of Claims 1 to 3, the supporting spring being supported in the supporting region (18) on the clutch cover (3) indirectly by means of a plurality of pins (19) which are arranged distributed in the circumferential direction (U) of the pressure plate assembly (2) or directly by means of hooks which are configured in one piece with the clutch cover (3)

5. Pressure plate assembly (2) according to at least one of Claims 1 to 4, a wear adjusting device (7) being provided for the automatic adjustment of clutch wear, and an adjusting ring (8) of the wear adjusting device (7) being arranged preferably in the axial direction (A) between the pressing plate (4) and the lever element (10) and/or preferably in the radial direction (R) outside the second bearing region (15).

6. Clutch apparatus (1) having at least one counterpressure plate (5) and at least one pressure plate assembly (2) according to at least one of Claims 1 to 5, the clutch cover (3) of the pressure plate assembly (2) being fastened to the counterpressure plate (5)

## Revendications

1. Ensemble de plaque de pression (2) avec au moins un couvercle d'embrayage (3) au moins une plaque de pression (4) disposée au moins en partie à l'intérieur du couvercle d'embrayage (3) et déplaçable de façon limitée dans la direction axiale (A) de l'ensemble de plaque de pression (2) pour le serrage avec friction d'un disque d'embrayage (6) entre la plaque de pression (4) et une contre-plaque de pression (5) et au moins un élément de levier (10), qui est monté sur le couvercle d'embrayage (3) de façon inclinable au moyen d'un appui pivotant (11), dans lequel l'appui pivotant (11) présente un appui (12) du côté du couvercle, s'appliquant sur une surface (16) de l'élément de levier (10) tournée vers le couvercle d embrayage (3) dans une première région d'appui (14) et un appui (13) du côté de la plaque de pression sous la forme d'un ressort de support, s'appliquant sur une surface (17) de l'élément de levier (10) tournée vers la plaque de pression (4) dans une deuxième région d'appui (15), dans lequel la première région d'appui (14) de l'appui côté couvercle (12) est disposée sur l'^{l'}élément de levier (10), en particulier dans l'état non actionné de l'ensemble de plaque de pression (2), dans la direction radiale (R) de l'ensemble de plaque de pression (2) plus loin à l'intérieur que la deuxième région d'appui (15) du ressort de support sur l'élément de levier (10), et dans lequel le ressort de support est supporté dans une région de support (18) indirectement ou directement sur le couvercle d'embrayage (3), **caractérisé en ce que** la région de support (18) dans laquelle le ressort de support est supporté indirectement ou directement sur le couvercle d'embrayage (3), est la région dans laquelle le ressort de support 5 s'applique pour le support, et cette région est disposée en direction radiale (R) plus loin à l'intérieur que la première région d'appui (14) de l'appui côté couvercle (12) sur l'élément de levier (10), dans lequel l'appui côté couvercle (12) est formé par un anneau de fil.

2. Ensemble de plaque de pression (2) selon la revendication 1, dans lequel la première région d'appui (14) et/ou la deuxième région d'appui (15) est/ sont réalisée(s) sous la forme d'un anneau ininterrompu.

3. Ensemble de plaque de pression (2) selon au moins une des revendications 1 ou 2, dans lequel le ressort de support est réalisé sous forme d'anneau.

4. Ensemble de plaque de pression (2) selon au moins une des revendications 1 à 3, dans lequel le ressort de support est supporté sur le couvercle d'embrayage (3) dans la région de support (18) indirectement au moyen de plusieurs goujons (19) disposés de façon répartie dans la direction périphérique (U) de l'ensemble de plaque de 35 pression (2) ou directement au moyen de crochets formés d'une seule pièce avec le couvercle d'embrayage (3).

5. Ensemble de plaque de pression (2) selon au moins une des revendications 1 à 4, dans lequel il est prévu un dispositif de rattrapage d'usure (7) pour le rattrapage automatique de l'usure de l'embrayage, et un anneau de réglage (8) du dispositif de rattrapage d'usure (7) est disposé de préférence en direction axiale (A) entre la plaque de pression (4) et l'élément de levier (10) et/ou de préférence en direction radiale (R) à l'intérieur de la deuxième région d'appui (15).

6. Dispositif d'embrayage (1) avec au moins une contre-plaque de pression (5) et au moins un ensemble de plaque de pression (2) selon au moins une des revendications 1 à 5, dans lequel le couvercle d'embrayage (3) de l'ensemble de plaque de pression (2) est fixé à la contre-plaque de pression (5).
